Europäisches Patentamt

European Patent Office

Office européen des brevets

(19)

(11) Veröffentlichungsnummer: **0 250 005**
**B1**

(12)     # EUROPÄISCHE PATENTSCHRIFT

(45) Veröffentlichungstag der Patentschrift:
19.09.90

(51) Int. Cl.⁵: **B32B 3/28**, E04C 2/32, E04C 2/34

(21) Anmeldenummer: 87111785.9

(22) Anmeldetag: 28.03.85

(60) Veröffentlichungsnummer der früheren Anmeldung
nach Art. 76 EPÜ: 0158234

(54) Flächenförmiger Sandwichformkörper.

(30) Priorität: 05.04.84 DE 3412846

(43) Veröffentlichungstag der Anmeldung:
23.12.87 Patentblatt 87/52

(45) Bekanntmachung des Hinweises auf die Patenterteilung:
19.09.90 Patentblatt 90/38

(84) Benannte Vertragsstaaten:
AT BE CH DE FR GB IT LI LU NL SE

(56) Entgegenhaltungen:
FR-A- 2 317 096
FR-A- 2 325 503
GB-A- 642 722
US-A- 3 051 608

(73) Patentinhaber: HOECHST AKTIENGESELLSCHAFT,
Postfach 80 03 20, D-6230 Frankfurt am Main 80(DE)

(72) Erfinder: Disselbeck, Dieter, Am Rehsteig 3, D-6232 Bad
Soden am Taunus(DE)
Erfinder: Stahl, Dieter, Am Mühlenbach 24,
D-6239 Kriftel(DE)

## Beschreibung

Die Erfindung betrifft ein faseriges Kernmaterial für die Herstellung flächenförmiger Sandwichformkörper gemäß Anspruch 1, sowie Sandwichformkörper gemäß Anspruch 5. Sandwichplatten als Leichtkernverbundplatten haben gegenüber herkömmlichen Baustoffen den Vorteil, daß sie bei geringem Flächengewicht eine hervorragende Biegefestigkeit aufweisen. Sie bestehen üblicherweise aus zwei relativ dünnen äußeren Deckschichten aus einem harten, festen und steifen Material. Diese beiden Deckschichten sind über einen relativ dicken Kern miteinander verbunden, wobei dieser Kern aus einem leichten und weniger steifen Material besteht. Die Bindung zwischen dem Kern und den Deckschichten muß dabei so fest sein, daß beispielsweise bei Einwirken einer Kraft keine Ablösung der Deckschicht vom Kern erfolgt. In dieser Hinsicht haben die insbesondere auch im Flugzeugbau verwendeten Kernmaterialien aus leichten Waben (sogenannte honeycombs), den Nachteil, daß als Bindungsflächen nur die dünnen Stege des senkrecht zu den Deckschichten stehenden Wabenkernmaterials zur Verfügung stehen. Für viele Anwendungsfälle, wie z.B. für Fußbodenplatten in Flugzeugen, können damit nicht die erforderlichen Festigkeitswerte erreicht werden. Dies gilt insbesondere dann, wenn beispielsweise aus Gründen des Brandverhaltens der Einsatz von Phenolharzgebundenen Systemen für Kern und Deckschichten angestrebt wird.

Größere Bindungsflächen zwischen Kernmaterial und Außenschichten von Sandwichkörpern werden beispielsweise in der FR-A-23 25 503 beschrieben. Gemäß dieser Vorliteratur soll das Kernmaterial aus einer beispielsweise in Näpfchenform gepreßten und ausgehärteten Harzmasse bestehen. Auf grund des Einsatzes dieser gepreßten Harzmassen, die ggf. auch noch durch Zusatz von Glasfasern verstärkt sein können, wird ein massives und damit schweres und luftdurchlässiges Kernmaterial offenbart, daß der von einem Kernmaterial für Sandwichformkörper geforderten Leichtigkeit und räumlichen Anpassungsfähigkeit noch in keiner Weise entspricht.

Der Einsatz von textilen Geweben für die Herstellung von elastischen Kissen- oder Polsterflächen war bereits aus der US-A-30 51 608 bekannt die ein faseriges Kernmaterial gemäß dem Oberbegriff des Anspruchs 1 offenbart. Derartige Materialien sind aufgrund der geforderten Flexibilität der einzelnen luftundurchlässigen Kammern für einen Einsatz als Kernmaterial von Sandwichkörpern gemäß der vorliegenden Erfindung unbrauchbar.

Es bestand daher immer noch die Aufgabe, flächenförmige Sandwichformkörper zur Verfügung zu stellen, die unter Beachtung der üblichen Gewichtsminimierung hohe Festigkeitswerte aufweisen und insbesondere auch den Einsatz brandtechnisch geeigneter Materialien erlauben, die nur geringe Bindungskräfte zwischen Kern und Deckschichten vermitteln können.

Diese Aufgabe wurde erfindungsgemäß gelöst durch den Einsatz eines neuartigen Kernmaterials, das durch Tiefziehen wenigstens eines mit Kunstharz versehenen Flächengebildes aus einem Gewebe oder Vlies erhalten wurde und das in üblicher Weise beidseitig mit Deckschichten versehen ist. Die Verformung des Flächengebildes aus Fasermaterialien kann beispielsweise in der Art erfolgen, daß das imprägnierte Flächengebilde in eine Tiefziehform eingelegt und verformt wird, wobei durch die gleichzeitig ausgeführte Erwärmung das Kunstharz zur Aushärtung gebracht wird. Nach dem Entformen erhält man ein profiliertes Gebilde, das je nach Art des Werkzeugs beispielsweise tiefgezogene Näpfchen mit rundem, viereckigem oder sechseckigem Querschnitt, Stege oder aber auch beliebig anders ausgebildete geometrische Strukturen aufweist. Auf dieses so gebildete Kernmaterial werden dann die äußeren Deckschichten aufgebracht. Die Verbindung zwischen dem Kernmaterial und den Deckschichten kann beispielsweise durch ein Harzmaterial beispielsweise ein Kondensationsharz erfolgen.

Unter Flächengebilden aus Fasermaterial werden die bekannten Flächengebilde aus einem Vlies verstanden. Flächengebilde aus Maschware (Gewirk oder Gestrick) sind Gegenstand der Stammanmeldung EP-A-0 158 234, Anmeldungsnr. 85 103 731.7. Bei dem Fasermaterial kann es sich um Stapelfasern oder endloses Material handeln, das beispielsweise zu Vliesen oder aber zu Stapelfasergarnen und dann weiter zu einem Flächengebilde (Vlies) verarbeitet wurde. Die fadenbildende Substanz der Fasermaterialien kann beispielsweise aus Polyacrylnitril, Polyestern oder Polyamiden, insbesondere Aramiden, bestehen oder aus Glas-oder Kohlenstoffasern. Gegebenenfalls ist es auch möglich, Naturfasern einzusetzen.

Der Einsatz von Stapelfasergarnen bzw. Multifilamentgarnen ist mit dem Vorteil verbunden, daß derartige Garne wesentlich besser von den Harzmaterialien durchtränkt werden als beispielsweise Monofilamente, die nur an ihrer Oberfläche geringe Mengen von Harz aufnehmen können. Der Einsatz von Multifilamenten hat auch den Vorteil, daß die Verformung des daraus hergestellten Flächengebildes im allgemeinen einfacher zu bewerkstelligen ist als bei Einsatz von relativ steifen Monofilamenten. Darüberhinaus ist zu erwarten, daß die Verbindung der harzgetränkten Multifilamentgarne des Kerns mit den Deckschichten fester ausgeführt werden kann, als bei der notwendigen Einbettung von Monofilamenten in Harzmassen an dieser Stelle.

Als Deckschichten für die erfindungsgemäßen flächenförmigen Sandwichformkörper eignen sich alle auch bisher verwendeten Außenplatten für Sandwichkonstruktionen, wie beispielsweise Aluminium oder Stahlbleche, insbesondere aber Kunstharzlaminate mit Einlagen beispielsweise aus Geweben aus Kohlenstoff- oder Glasfäden. In einfacheren Fällen, in denen keine hohen Festigkeiten erwartet werden, eignen sich als Deckschichten beispielsweise aber auch Sperrholzplatten und dergleichen.

Wie bereits weiter oben ausgeführt, kann das erfindungsgemäße Kernmaterial nicht nur aus einer Lage aus verformten und mit Kunstharz versehenen Flächengebilden bestehen sondern aus mehreren Lagen, die zweckmäßiger weise übereinander- oder ineinandergreifend angeordnet sind. Zur weiteren Verdeutlichung der Erfindung sollen die beigefügten Figuren dienen.

Figur 1 zeigt in einer perspektivischen Ansicht den möglichen prinzipiellen Aufbau eines erfindungsgemäßen flächenförmigen Sandwichformkörpers, während

die Figuren 2 bis 4 Schnitte durch derartige Sandwichformkörper wiedergeben.

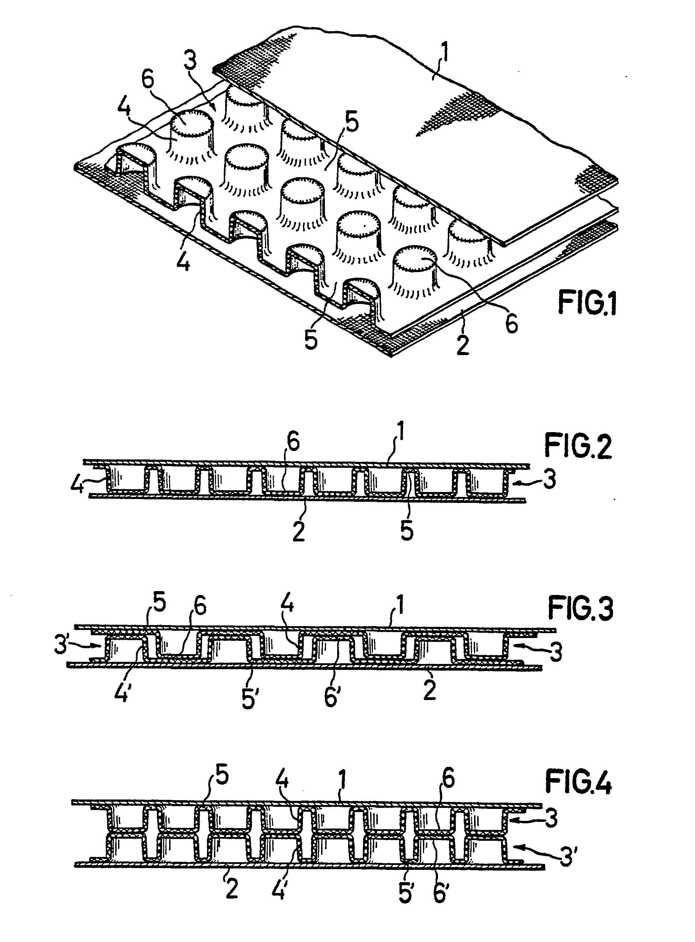

Der in Figur 1 wiedergegebene flächenförmige Sandwichformkörper besteht aus einer oberen festen Deckschicht 1 und einer entsprechenden unteren festen Deckschicht 2. Zur besseren Verdeutlichung sind die einzelnen Schichten in Figur 1 zum Teil weggeschnitten, um einen besseren Einblick in den flächenförmigen Sandwichformkörper gemäß der Erfindung zu bekommen. Die Deckschichten 1 und 2 könnten beispielsweise aus mit Glasfasergewebe verstärkten Kunstharzlaminaten bestehen. Der leichte Kern des Sandwichkörpers ist durch das regelmäßig verformte Flächengebilde 3 gegeben. Im Fall der Ausführungsform gemäß Figur 1 weist das verformte Flächengebilde 3 eine Vielzahl von regelmäßig angeordneten Näpfchen 4 auf. Diese Näpfchen 4 sind durch Verformen des mit Kunstharz versehenen Flächengebildes 3 entstanden. Durch die Verformung sind neue Flächen 6 entstanden, die parallel zu der ursprünglichen Ebene 5 des Flächengebildes verlaufen. Die Bindungsflächen zwischen den festen Deckschichten und dem leichteren Kernmaterial sind die Berührungsflächen zwischen beispielsweise der oberen festen Deckschicht 1 und den neugebildeten Ebenen 6 der Näpfchen des geformten Flächengebildes auf der einen Seite, und auf der anderen Seite des Sandwichformkörpers sind es die Berührungsflächen zwischen der festen Deckplatte 2 und den verbliebenen Restflächen 5 des Flächengebildes.

Mögliche räumliche Anordnungsformen des Kernmaterials zeigen die Figuren 2, 3 und 4. Die Figur 2 gibt die Situation der Figur 1 in einem Querschnitt wieder. Zwei feste Deckschichten 1 und 2 sind über ein verformtes Flächengebilde 3 miteinander verbunden. Das verformte Flächengebilde 3 weist dabei als Berührungsflächen einmal die neugebildeten Flächen 6 der einzelnen Näpfchen und auf der anderen Seite die verbliebenen Restteile der ursprünglichen Ebene 5 des Flächengebildes 3 auf. Die Verbindung zwischen der oberen Deckschicht 1 und dem verformten Flächengebilde 3 bilden die Berührungsflächen zwischen der oberen Deckschicht 1 und der nach dem Verformen übrig gebliebenen Reste der ursprünglichen Ebene 5 des verformten Flächengebildes 3. Auf der anderen Seite ergibt sich die Verbindung zwischen der unteren Deckschicht 2 und dem verformten Flächengebilde 3 als Kernschicht durch die Berührungsflächen zwischen der unteren Deckschicht 2 und den neuen Ebenen 6 der Näpfchen 4, die durch Verformung des Flächengebildes 3 entstanden sind.

Im Gegensatz zur Figur 2 werden in den Figuren 3 und 4 flächenförmige Sandwichformkörper im Querschnitt dargestellt, bei denen die Kernschicht aus zwei verformten Flächengebilden 3 und 3' gegeben ist. Bei der Ausführung gemäß Figur 3 sind die verformten Flächengebilde 3 und 3' ineinandergreifend angeordnet und führen somit zu einer besonders festen und steifen Ausführungsform des Kerns Derartige Sandwichformkörper zeichnen sich durch einen schmalen, sehr steifen Kern aus, wobei natürlich zur Erreichung einer optimalen Festigkeit es erforderlich ist, für eine ausreichende Bindung beispielsweise der neuen Flächen 6 der näpfchenförmigen Verformungen mit den Restebenen 5' des zweiten Flächengebildes 3' und natürlich dann mit der entsprechenden Deckschicht 2 zu sorgen. Für die obere Deckschicht und ihre Verbindung zu den einzelnen geformten Teilen der Flächengebilde 3 und 3' gilt das Entsprechende.

In Figur 4 ist eine leichtere Ausgestaltung des Kernmaterials ebenfalls unter Einsatz von zwei geformten Flächengebilden 3 und 3' dargestellt. Bei dieser Ausführungsform wird die Verbindung zwischen den Deckschichten 1 und 2 über die Berührungsflächen dieser Deckschichten mit den restlichen Flächen der ursprünglichen Ebenen 5 bzw. 5' gegeben, während die mittlere Verbindung durch eine entsprechende Bindung der neugeschaffenen Ebenen 6 bzw. 6' in der Mitte des Kerns gegeben sein muß. Derartige Verbindungen können beispielsweise durch Einsatz entsprechender Harzsysteme erreicht werden.

In den genannten Figuren sind die Verformungen jeweils als runde Näpfchen dargestellt worden. Natürlich sind auch andere Verformungen denkbar, beispielsweise eine Verformung mit viereckigem oder wabenförmigem Querschnitt.

Mit dem erfindungsgemäßen Kernmaterial ist es aufgrund der Variationsbreite in der Wahl der Werkstoffe möglich, den jeweiligen Anforderungen optimal angepaßte Sandwichsysteme in kostengünstigen Ausführungen zur Verfügung zu stellen. Der besondere Vorteil besteht bei dem erfindungsgemäßen Sandwichformkörper darin, daß die Größe der Bindungsflächen in einem weiten Bereich gewählt werden kann. Sie kann beispielsweise 30, 40 oder sogar 50 % der Gesamtfläche der festen Deckschicht betragen. Dies bedeutet, daß bei einer Druckbelastung der Sandwichplatte an der Grenzfläche zwischen Kern und Decklage auftretende Kräfte sicher aufgenommen werden können, ohne daß es zu einem Knittern oder Ablösen der Decklage kommt. Damit ist beispielsweise auch der Einsatz verbindungsmäßig problematischer, mit Glasfaser oder Kohlefaser verstärkter Phenolharzsysteme möglich, die wegen ihres Brandverhaltens insbesondere für Flugzeugbauteile von Interesse sind.

Im Gegensatz dazu weisen die häufig im Flugzeugbau verwendeten leichten Kernmaterialien aus Hohlkörpern in Form von Rohrabschnitten mit wabenförmigem Querschnitt (sogenannte honeycombs) nur sehr geringe Bindungsflächen auf. Bei derartigen Systemen steht ja nur die Wandstärke der Waben zur Verfügung, sie beträgt bei bekannten Ausführungen maximal 10 % und ist aus diesem Grunde nicht ausreichend für die Verwendung faserverstärkter Phenolharzsysteme zum Verbinden der Kernschicht mit den Deckschichten. Mit dem erfindungsgemäßen Kernmaterial hingegen können leichte Sandwichplatten zur Verfügung gestellt werden, die vollständig aus einem glasfaserverstärkten Phenolharzsystem bestehen und damit hervorragende brandtechnische Eigenschaften aufweisen und zudem vergleichsweise kostengünstig herzustellen sind.

Ein weiterer Vorteil des erfindungsgemäßen Kernmaterials besteht darin, daß es sich räumlich verformen läßt und so auch die Herstellung von ge krümmten flächenförmigen Formkörpern ohne Anwendung einer besonderen Zuschnittechnik ermöglicht. Die erfindungsgemäßen verformten Flächengebilde aus Fasermaterialien können beispielsweise direkt auf Modelle aufgelegt und dann in diesem Zustand unter Spannung mit den Deckschichten und einem entsprechend geeigneten Harzsystem zu einem beispielsweise gebogenen flächenförmigen Formkörper verarbeitet werden.

Zur Erzeugung von Sandwichformkörpern mit besonders hohen Festigkeitseigenschaften ist es erforderlich, die Verformung der Flächengebilde aus Fasermaterial so vorzunehmen, daß diese Verformung wenigstens in einer Richtung senkrecht zur ursprünglichen Ebene des Flächengebildes aus Fasermaterial erfolgt. Dabei sollten die Verformungen die Gestalt von Näpfchen oder Stegen oder dergleichen aufweisen, und diese Verformungen damit jeweils neue Ebenen aufweisen, die parallel zur ursprünglichen Ebene des Flächengebildes verlaufen. In den beigefügten Figuren 1 bis 4 entsprechen die dort gezeigten Näpfchen dieser Forderung. Um möglichst hohe Festigkeiten zu erreichen ist die Zahl, die Größe, die Form und die räumliche Anordnung der einzelnen Verformungen der Flächengebilde so auszuwählen, daß die Berührungsflächen des geformten Flächengebildes mit den Deckschichten bzw. die Berührungsflächen der geformten Flächengebilde untereinander, sofern mehrere Flächengebilde eingesetzt werden als Kernmaterial, ein Maximum ergeben. Vorteil des erfindungsgemäßen Materials ist ja gerade, daß das Kernmaterial nicht aus offenen, abgeschnittenen Röhrensystemen oder ähnlichem besteht, sondern aus einem beispielsweise näpfchenartig verformten Flächenmaterial, d.h. einem Material, das eine wesentlich größere Berührungsfläche zwischen Kernmaterial und den Deckschichten zuläßt als bisher bekannte Systeme aus Hohlstrukturen.

Wird die Temperatur bei der Verformung bzw. dem Tiefziehen sehr hoch gewählt, so daß bereits ein Fließen der eingesetzten Fasermaterialien auftreten kann bzw. nicht mehr vermieden werden kann, muß häufig mit einer Verschlechterung der physikalischen Eigenschaften des Flächengebildes und damit auch der physikalischen Eigenschaften der Kernschicht des Sandwichformkörpers gerechnet werden. Bevorzugte Ausführungsformen des erfindungsgemäßen Formkörpers sollten daher vorzugsweise keine durch thermische Beeinflussung bei der Verformung veränderte Fasern bzw. Fäden im Kern des Sandwiches aufweisen.

Bei leichten Sandwichkonstruktionen, bei denen nicht auf maximale Festigkeit geachtet werden soll, sondern beispielsweise mehr auf Leichtigkeit des erzeugten großvolumigen Formkörpers, ist es nicht erforderlich, auf besonders hohe Flächenanteile in den Berührungsebenen zu achten. In solchen Fällen ist es ohne weiteres möglich, auf die besonders große Ausführung der Berührungsflächen der verformten Flächengebilde des Kerns zu verzichten. Statt näpfchenförmiger Verformungen können so beispielsweise kegelförmige Verformungen eingesetzt werden oder aber Materialien, die nicht nur in einer Richtung verformt worden sind sondern parallel dazu noch in der entgegengesetzten Richtung. Sandwichformkörper, die unter Verwendung derartiger Kernmaterialien verarbeitet worden sind, weisen zwar eine geringere Festigkeit, dafür aber ein besonders geringes Raumgewicht auf.

**Patentansprüche**

1. Faseriges Kernmaterial für die Herstellung flächenförmiger Sandwichformkörper, das durch Tiefziehen erzeugte Verformungen aufweist, die sich wenigstens in eine Richtung senkrecht zur ursprünglichen Ebene des unverformten Materials erstrecken und die jeweils eine neue Ebene besitzen, die parallel zur ursprünglichen Ebene des unverformten Materials verläuft, dadurch gekennzeichnet, daß es aus einem durch Tiefziehen verformten mit Kunstharz imprägnierten Flächengebilde aus einem Vlies besteht.

2. Kernmaterial nach Anspruch 1, dadurch gekennzeichnet, daß das Kernmaterial ein ausgehärtetes Kunstharz, vorzugsweise ein Kondensationsharz, enthält.

3. Kernmaterial nach Anspruch 1, dadurch gekennzeichnet, daß Zahl, Größe, Form und räumliche Anordnung der Verformung pro Flächeneinheit des Flächengebildes so ausgewählt werden, daß die Flächen der ursprünglichen Ebene und der neuen, dazu parallelen Ebene möglichst groß werden.

4. Kernmaterial nach einem der Ansprüche 1 bis 3, dadurch gekennzeichnet, daß das Kernmaterial aus 2 oder mehr mit Kunstharz imprägnierten Flächengebilden aus einem Vlies besteht, die in einem solchen regelmäßigen Muster durch Tiefziehen verformt sind, daß eine regelmäßige Anordnung der Flächengebilde über- oder ineinander unter Ausbildung großer Berührungsflächen möglich ist.

5. Flächenförmige Sandwichformkörper, bestehend aus zwei äußeren festen Deckschichten, die über einen Kern aus leichtem und weniger steifem Material verbunden sind, dadurch gekennzeichnet, daß das Kernmaterial aus mindestens einem, durch Tiefziehen verformten und mit Kunstharz imprägnierten Flächengebilde aus einem Vlies gemäß Anspruch 1 besteht.

6. Flächenförmiger Sandwichformkörper nach Anspruch 5, dadurch gekennzeichnet, daß das Kernmaterial aus zwei oder mehreren durch Tiefziehen regelmäßig verformten und mit Kunstharz versehenen Flächengebilden aus einem Vlies besteht, die in Lagen übereinander oder ineinandergreifend angeordnet sind.

7. Flächenförmiger Sandwichformkörper nach Anspruch 5 oder 6, dadurch gekennzeichnet, daß das den Kern bildende geformte Flächengebilde ein ausgehärtetes Kunstharz, vorzugsweise ein Kondensationsharz, enthält.

## Claims

1. A fibrous core material for producing sheet-like sandwich moldings, which material has deformations produced by deep-drawing, which deformations extend at least in one direction at right angles to the original plane of the undeformed material and each have a new plane which runs parallel to the original plane of the undeformed material, wherein the said core material consists of a sheet-like structure of a nonwoven which has been deformed by deep-drawing and been impregnated with synthetic resin.

2. The core material as claimed in claim 1, wherein the core material contains a cured synthetic resin, preferably a condensation resin.

3. The core material as claimed in claim 1, wherein number, size, shape and spatial arrangement of the deformations per unit area of the sheet-like structure are so selected that the surfaces of the original plane and of the new plane parallel thereto are maximized.

4. The core material as claimed in one of claims 1 to 3, wherein the core material consists of 2 or more sheet-like structures of a nonwoven impregnated with synthetic resin, which sheet-like structures are deformed by deep-drawing in such a regular pattern that a regular arrangement of the sheet-like structures above one another or in one another, forming large contact surfaces, is possible.

5. A sheet-like sandwich molding, comprising two outer firm covering layers connected by a core of light and less rigid material, wherein the core material consists of at least one sheet-like structure of a nonwoven which has been deformed by deep-drawing and been impregnated with synthetic resin as claimed in claim 1.

6. The sheet-like sandwich molding as claimed in claim 5, wherein the core material consists of two or more sheet-like structures of a nonwoven regularly deformed by deep-drawing and provided with synthetic resin, which sheet-like structures are arranged in layers above one another or interpenetratingly.

7. The sheet-like sandwich molding as claimed in claim 5 or 6, wherein the molded sheet-like structure forming the core contains a cured synthetic resin, preferably a condensation resin.

## Revendications

1. Matériau fibreux formant noyau pour la fabrication de corps à structure sandwich planiforme, qui possède des parties déformées formées par emboutissage, qui s'étendent au moins dans une direction perpendiculairement à la surface initiale du matériau non déformé et définissent respectivement un nouveau plan parallèle au plan initial du matériau non déformé, caractérisé en ce qu'il est constitué par une structure plane formée d'un non tissé déformée par emboutissage et imprégnée par une matière plastique.

2. Matériau formant noyau selon la revendication 1, caractérisé en ce que ce matériau formant noyau contient une résine plastique durcie, de préférence une résine de condensation.

3. Matériau formant noyau selon la revendication 1, caractérisé en ce que le nombre, la taille, la forme et la disposition spatiale des parties déformées par unité de surface de la structure plane sont choisis de manière que les surfaces situées dans le plan initial et les surfaces situées dans le nouveau plan parallèle au précédent, sont aussi étendues que possible.

4. Matériau formant noyau selon l'une des revendications 1 à 3, caractérisé en ce que ce matériau formant noyau est constitué de 2 ou d'un plus grand nombre de structures planes formées d'un non tissé imprégné par une résine synthétique, qui sont déformées par emboutissage selon un modèle régulier tel qu'il est possible d'obtenir une disposition régulière des structures planes superposées ou imbriquées les unes dans les autres, moyennant la formation de surfaces étendues de contact.

5. Corps à structure sandwich planiforme, constitué de deux couches extérieures rigides de revêtement, qui sont reliées par l'intermédiaire d'un noyau réalisé en un matériau léger et moins rigide, caractérisé en ce que le matériau formant le noyau est constitué par au moins une structure plane formée d'un non tissé déformée par emboutissage et imprégnée d'une résine synthétique, conforme à la revendication 1.

6. Corps à structure sandwich planiforme selon la revendication 5, caractérisé en ce que le matériau formant noyau est constitué par deux ou plusieurs structures planes formées d'un non tissé déformées d'une manière uniforme par emboutissage et comportant une résine synthétique, qui sont superposées selon des couches ou sont imbriquées les unes dans les autres.

7. Corps à structure sandwich planiforme selon la revendication 5 ou 6, caractérisé en ce que la structure plane conformée constituant le noyau contient une résine synthétique durcie, de préférence une résine de condensation.

FIG.1

FIG.2

FIG.3

FIG.4